(19) Europäisches Patentamt
European Patent Office
Office européen des brevets

(11) **EP 3 499 177 A2**

(12) **EUROPÄISCHE PATENTANMELDUNG**

(43) Veröffentlichungstag:
**19.06.2019 Patentblatt 2019/25**

(51) Int Cl.:
**G01B 11/06** *(2006.01)* **G02B 21/00** *(2006.01)*

(21) Anmeldenummer: **18209787.3**

(22) Anmeldetag: **03.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.12.2017 DE 102017223014**

(71) Anmelder: **Carl Zeiss Microscopy GmbH 07745 Jena (DE)**

(72) Erfinder:
• **KALKBRENNER, Thomas 07745 Jena (DE)**
• **SIEBENMORGEN, Jörg 07743 Jena (DE)**

(74) Vertreter: **Meyer, Jork Carl Zeiss AG Patentabteilung Carl-Zeiss-Promenade 10 07745 Jena (DE)**

(54) **VERFAHREN ZUR BESTIMMUNG DER DICKE EINER PROBENHALTERUNG IM STRAHLENGANG EINES MIKROSKOPS**

(57) Die Erfindung betrifft ein Verfahren zur Bestimmung der Dicke (d) einer für eine Beleuchtungsstrahlung (BS) transparenten und zur Aufnahme einer Probe (5) ausgebildeten Probenhalterung (7) im Strahlengang eines Mikroskops (1). Die Probenhalterung (7), die eine erste Seitenfläche (OS) und eine zweite Seitenfläche (US) aufweist, wird in einer Probenebene (4) angeordnet und erste Seitenfläche (OS) und zweite Seitenfläche (US) der Probenhalterung (7) werden parallel zur Probenebene (4) ausgerichtet. Es wird mindestens eine Bündel der Beleuchtungsstrahlung (BS) entlang einer ersten optischen Achse (A1) unter einem Beleuchtungswinkel auf die ausgerichtete Probenhalterung (7) gerichtet und mindestens zwei Messwerte eines reflektierten Anteils (BSref) der Beleuchtungsstrahlung (BS) oder mindestens zwei Messwerte einer durch die Beleuchtungsstrahlung (BS) bewirkten Detektionsstrahlung (DS) erfasst.

In Abhängigkeit der mindestens zwei erfassten Messwerte wird ein Abstand von erster und zweiter Seitenfläche (OS, US) in Richtung der Z-Achse (Z) zueinander als Dicke (d) ermittelt.

Die Erfindung betrifft ferner ein Verfahren zur Erfassung von Bilddaten.

Fig. 5

EP 3 499 177 A2

**Beschreibung**

Die Erfindung betrifft ein Verfahren zur Bestimmung der Dicke einer Probenhalterung im Strahlengang eines Mikroskops.

Eine der Hauptanwendungen der Lichtblattmikroskopie liegt in der Bildgebung mittelgroßer Proben, beispielsweise von Organismen, mit einer Größe von einigen 100 μm bis hin zu wenigen Millimetern. In der Regel werden diese Proben in Agarose eingebettet und in einer Glaskapillare angeordnet. Zur Untersuchung der Probe wird die Glaskapillare in eine wassergefüllte Probenkammer eingebracht und die Agarose mit der Probe wird ein Stück weit aus der Kapillare herausgedrückt. Die Probe wird mit einem Lichtblatt beleuchtet. Die in der Probe angeregte und von dieser ausgehende Fluoreszenz wird mit einem Detektionsobjektiv, das senkrecht zum Lichtblatt und damit auch senkrecht zur Lichtblattoptik steht, auf einen Detektor, insbesondere eine Kamera, abgebildet.

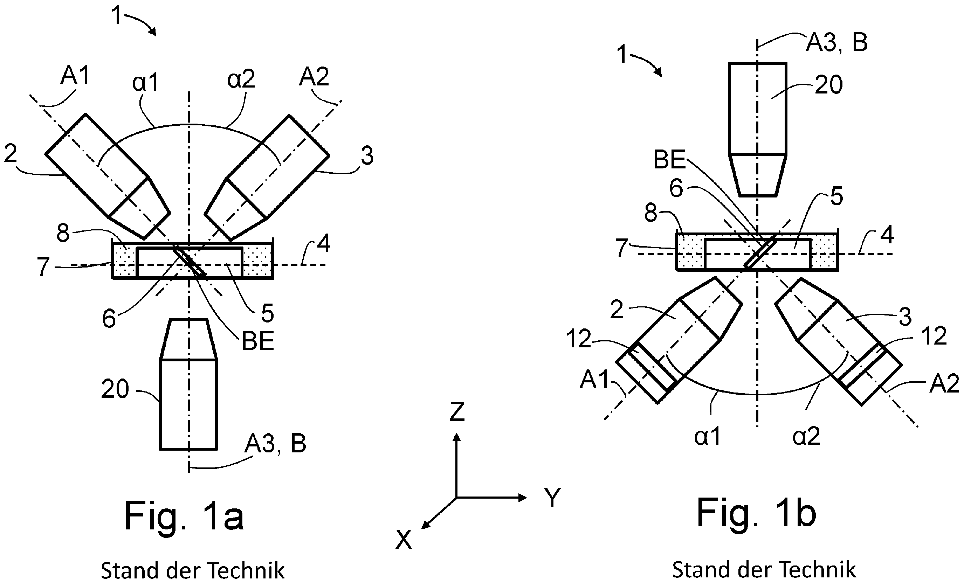

Ein Aufbau eines Mikroskops 1 für die Lichtblattmikroskopie (SPIM-Aufbau; Single Plane Illumination Microscopy) umfasst gemäß dem Stand der Technik ein Beleuchtungsobjektiv 2 mit einer ersten optischen Achse 1 und ein Detektionsobjektiv 3 mit einer zweiten optischen Achse A2 (nachfolgend auch als SPIM-Objektive bezeichnet), die jeweils unter einem Winkel von 45° zu einer Probenebene 4 und einem rechten Winkel zueinander von oben auf die Probenebene 4 gerichtet sind (siehe Fig. 1a). Eine in der Probenebene 4 angeordnete Probe 5 befindet sich zum Beispiel auf dem Boden einer als Petrischale ausgebildeten Probenhalterung 7. Die Probenhalterung 7 ist mit einer Flüssigkeit 8, beispielsweise Wasser, gefüllt und die beiden SPIM-Objektive 2, 3 sind während der Anwendung der Lichtblattmikroskopie in die Flüssigkeit 8 eingetaucht (nicht gezeigt). Die Probenebene 4 erstreckt sich in einer durch die X-Achse X und die Y-Achse Y eines kartesischen Koordinatensystems aufgespannten XY-Ebene. Die erste optische Achse A1 und die zweite optische Achse A2 verlaufen in einer durch die Y-Achse Y und die Z-Achse Z des kartesischen Koordinatensystems aufgespannten Ebene Y-Z.

Dieser Ansatz bietet den Vorteil einer hohen Auflösung in axialer Richtung, da mittels des Beleuchtungsobjektivs 2 und gegebenenfalls weiterer optisch wirksamer Elemente ein dünnes Lichtblatt 6 erzeugt werden kann. Aufgrund der höheren Auflösung können kleinere Proben 5 untersucht werden. Zusätzlich wird die störende Hintergrundfluoreszenz deutlich reduziert und damit das Signal/Hintergrund-Verhältnis verbessert.

Um eine einfachere Probenpräparation in Standard-Probenbehältern wie z. B. Multiwellplatten zu ermöglichen, kann die 45°-Konfiguration zwar beibehalten werden, aber die beiden SPIM-Objektive 2, 3 sind in einer inversen Anordnung von unten durch den transparenten Boden der Probenhalterung 7 in die Probenebene 4 gerichtet (Fig. 1b). In dieser Anordnung müssen die durch die relativ zu den optischen Achsen A1 und A2 geneigte und in Form eines Deckglases vorhandene Probenhalterung 7 hervorgerufenen Aberrationen durch spezielle optische Elemente korrigiert werden. Durch den Boden der Probenhalterung 7 wird die in der Probenebene 4 angeordnete Probe 5 beleuchtet und eine angeregte Fluoreszenz der Probe 5 detektiert. Es können Probenhalter 7, wie z. B. Multiwellplatten, Petrischalen und/oder Objektträger genutzt und eine Kontamination der Proben 5, insbesondere beim High-Throughput-Screening, vermieden werden.

Weitere technische Schwierigkeiten treten auf, wenn in dem Strahlengang des Beleuchtungsobjektivs 2 und/oder des Detektionsobjektivs 3 beispielsweise sogenannte Alvarezplatten als Korrekturelemente 12 (Fig. 1b) angeordnet sind (US 3,305,294 A). Die Alvarezplatten 12 sind so ausgebildet, dass sie genau bei einem festgelegten Winkel zwischen der Probenhalterung 7, beispielsweise einem Deckglas, und der optischen Achse A1, A2 des jeweiligen Objektivs 2, 3 auftretende Aberrationen korrigieren. Schon bei einer kleinen Abweichung des Winkels (z. B. <0.1°) treten unerwünschte Aberrationen auf, die zu einer verringerten Abbildungsqualität führen. Daher muss vor dem Beginn eines Experiments beispielsweise das Deckglas ausgerichtet werden, so dass die Winkelabweichung innerhalb der zulässigen Toleranzen liegt. Des Weiteren ist es hilfreich, wenn neben dem Winkel auch der Abstand zwischen dem Objektiv 2, 3 beziehungsweise einer eventuell vorhandenen Zusatzlinse (z. B. eine Meniskuslinse) und dem Deckglas einstellbar ist, so dass die Probe 5 beziehungsweise dessen abzubildender Bereich, in der Bildebene BE des Detektionsobjektivs 3 liegt.

Eine Möglichkeit zur Korrektur von Aberrationen eines Mikroskops, die durch ein Deckglas bedingt sind, ist aus der Publikation von McGorty et al. (2015: Open-top selective plane illumination microscope for conventionally mounted specimens; OPTICS EXPRESS 23: 16142 - 16153) bekannt. Das inverse SPIM-Mikroskop weist ein Wasserprisma auf, durch dessen Wirkung Aberrationen teilweise kompensiert werden, die infolge des schrägen Durchgangs des Detektionslichts durch das Deckglas auftreten.

Ein mögliches Verfahren zur Positionierung eines Probenhalters in einem Strahlengang eines Mikroskops ist in der dato nicht veröffentlichten DE 10 2016 212 019 beschrieben. In dem darin offenbarten Verfahren werden reflektierte Anteile einer Beleuchtungsstrahlung zur Erfassung aktueller Ist-Positionen und Ist-Lagen der Probenhalterung genutzt.

Neben der Positionierung der Probenhalterung können Aberrationen auch durch Abweichungen der tatsächlichen Dicke einer Probenhalterung von einer Nenndicke verursacht sein. Handelsübliche Deckgläser als auch die Böden von Petrischalen, Multiwell-Platten und ähnlichen Probenbehältnissen (nachfolgend zusammenfassend als Probenhalterung bezeichnet) weisen eine zulässige Streuung der Glas- beziehungsweise Materialdicke um die Nenndicke auf. So ist der Dickenbereich beispielsweise bei Deckgläsern der Stärke 1.5 mit 160-190 $\mu$m angegeben, die der Stärke 1 mit 130-160 $\mu$m. Wenn also beispielsweise das Korrekturelement für eine Nenndicke von 175 $\mu$m konzipiert oder eingestellt wurde, führt ein Deckglas oder ein Boden, beispielsweise ein Glasboden, mit einer Dicke von 160 $\mu$m bei dem für die inverse Konfiguration erforderlichen schiefen Durchgang beispielsweise einer Beleuchtungsstrahlung durch die Probenhalterung zu beträchtlichen Aberrationen, insbesondere bei hohen numerischen Aperturen.

Problematisch ist dabei, dass die Dicke des Deckglases oder des Bodens der Probenhalterung a priori nicht bekannt ist, und daher technische Lösungen benötigt werden, um die aktuelle Dicke und gegebenenfalls die erforderlichen Korrekturparameter des adaptiven Korrekturelements zu ermitteln und einzustellen.

Der Erfindung liegt die Aufgabe zugrunde, ein Verfahren zur Bestimmung der Dicke einer Probenhalterung im Strahlengang eines Mikroskops vorzuschlagen.

Die Aufgabe wird durch den Gegenstand des unabhängigen Anspruchs 1 gelöst. Vorteilhafte Ausgestaltungen sind in den abhängigen und nebengeordneten Ansprüchen angegeben.

Das Verfahren zur Bestimmung der Dicke einer für eine Beleuchtungsstrahlung transparenten und zur Aufnahme einer Probe ausgebildeten Probenhalterung im Strahlengang eines Mikroskops, umfasst die folgenden Schritte.

Ein Schritt A betrifft das Anordnen der Probenhalterung, die eine erste Grenzfläche und eine zweite Grenzfläche aufweist, in einer Probenebene. Die Probenebene befindet sich in einer durch eine X-Achse und eine Y-Achse eines kartesischen Koordinatensystems aufgespannten XY-Ebene.

In Schritt B erfolgt ein Ausrichten oder Justieren der ersten Grenzfläche und der zweiten Grenzfläche parallel zur Probenebene.

In einem Schritt C wird mindestens ein Bündel der Beleuchtungsstrahlung entlang einer ersten optischen Achse (Beleuchtungsachse) unter einem Beleuchtungswinkel auf die justierte Probenhalterung gerichtet.

Ein Schritt D betrifft das Erfassen mindestens zweier Messwerte eines reflektierten Anteils der Beleuchtungsstrahlung oder mindestens zweier Messwerte einer durch die Beleuchtungsstrahlung bewirkten Detektionsstrahlung.

Abschließend erfolgt in Schritt E in Abhängigkeit der mindestens zwei erfassten Messwerte ein Ermitteln eines Abstands von erster und zweiter Seitenfläche in Richtung der Z-Achse zueinander als Dicke.

Die Begriffe der Probenhalterung, Boden der Probenhalterung und Deckglas werden in dieser Beschreibung synonym verwendet, falls nicht ausdrücklich eine andere Bedeutung angegeben ist.

Unter einer Detektionsstrahlung sind an der Probe reflektierte Beleuchtungsstrahlung und/oder durch die Beleuchtungsstrahlung in der Probe bewirkte Strahlung, insbesondere angeregte Fluoreszenzstrahlung, zu verstehen. Die ersten und zweiten Grenzflächen sind beispielsweise Seitenflächen der Probenhalterung und werden nachfolgend auch als erste Seitenfläche und zweite Seitenfläche bezeichnet.

In dem erfindungsgemäßen Verfahren werden Messsignale verwendet, deren Werte maßgeblich von der Dicke der Probenhalterung beeinflusst werden. Die ermittelte Information der Dicke der Probenhalterung kann vorteilhaft dazu verwendet werden, um erforderliche Korrekturen im Strahlengang vorzunehmen und beispielsweise Aberrationen zu reduzieren. So kann im Strahlengang der Beleuchtungsstrahlung, in einem Strahlengang des reflektierten Anteils und/oder in einem Strahlengang der Detektionsstrahlung angeordnete optisch wirkende Korrekturelemente in Abhängigkeit der ermittelten Dicke angesteuert und deren relative Positionen und optischen Korrekturwirkungen in dem jeweiligen Strahlengang eingestellt werden.

Korrekturelemente sind beispielsweise Alvarezplatten, die gegeneinander gesteuert verschiebbar sind (auch als Alvarez-Manipulator bezeichnet), sodass als optische Wirkung korrekt zueinander eingestellter Alvarezplatten Aberrationen einer spezifischen Konstellation von Objektiven, Wellenlängen der Beleuchtungsstrahlung, Detektionsstrahlung und/oder Probenhalterung reduziert oder gar kompensiert werden. Als Korrekturelemente können zusätzlich oder alternativ gesteuert verformbare Spiegel (deformable mirror), ansteuerbare Spiegel- oder Mikrospiegelarrays (digital mirror device) und/oder Lichtmodulatoren (spatial light modulator, SLM) verwendet werden.

Eine optische Anordnung, insbesondere eine inverse Lichtblattanordnung, die zur Ausführung des erfindungsgemäßen Verfahrens in einer seiner Ausgestaltungen verwendet wird, weist beispielsweise optional ein Korrekturelement in dem Strahlengang der Beleuchtungsstrahlung auf. Dieses Korrekturelement, welches auch aus mehreren Teilelementen, beispielsweise aus zwei Alvarezplatten, bestehen kann, kann für eine statische Korrektur von Aberrationen ausgelegt sein. In dem Strahlengang der Detektionsstrahlung ist ein Korrekturelement hinsichtlich seiner optischen Wirkungen gesteuert veränderbar ausgestaltet, sodass mittels einer entsprechenden Ansteuerung des Korrekturelements auftretende Aberrationen beeinflusst, insbesondere reduziert werden können. Die Korrekturelemente in den verschiedenen Strahlengängen können gleichartig oder gar identisch sein. Es können auch in den Strahlengängen von Beleuchtungsstrahlung und Detektionsstrahlung Korrekturelemente vorhanden sein, die ansteuerbar sind und deren gemeinsame optische Wirkung zu einer Reduzierung von Aberrationen führt.

In weiteren Ausgestaltungen des Verfahrens wird die Beleuchtungsstrahlung in Form eines Lichtblatts auf die Probenhalterung gerichtet und ein Lichtblatt in der Probenebene erzeugt. Ist in der Probenebene eine zu untersuchende Probe vorhanden, wird diese mit dem Lichtblatt beleuchtet und es können entsprechend Bilder der beleuchteten Bereiche der Probe erfasst werden.

Es ist also möglich, dass verschiedene Beleuchtungsstrahlungen eingesetzt werden, um beispielsweise unterschiedliche Teilschritte des erfindungsgemäßen Verfahrens auszuführen. Ein Lichtblatt kann als ein statisches oder dynamisches Lichtblatt erzeugt werden, wie dies dem Fachmann aus dem Stand der Technik bekannt ist.

Die Beleuchtungsstrahlung wird als mindestens ein Bündel von Einzelstrahlen (Strahlenbündel), bereitgestellt und auf die Probenhalterung gerichtet. Eine typische Form der Beleuchtungsstrahlung ist ein sogenannter Gauss-Strahl.

In weiteren Ausgestaltungen des erfindungsgemäßen Verfahrens kann eine Strahlung mit selbstrekonstruierenden Strahlen oder diffraktionsfreien Strahlen (englisch: non-diffractive beams) als Beleuchtungsstrahlung verwendet sein und beispielsweise in Form eines Besselstrahls, eines Mathieustrahls, eines Sinc$^3$-Strahls, eines Lattice-Lightsheets, eines Coherent Besselstrahls, eines Sectioned Besselstrahl oder eines Airystrahls ausgebildet und auf die Probenhalterung gerichtet werden.

Ein Mathieustrahl kann als ein ausbreitungsinvariantes optisches Feld (propagation-invariant optical field) gemäß der Helmholtzgleichung mit elliptischen Koordinaten angesehen werden (Gutierrez-Vega, J. C. et al, 2001: Experimental demonstration of optical Mathieu beams; Optics Communications 195: 35 - 40).

Von einem Gauss-Strahl abweichende Strahlformen z.B. der Sinc$^3$-Strahl, weisen eine intrinsische Strukturierung auf, die sich besonders für die Analyse der Bildgütemaße Schärfe und/oder Kontrast eignet, wie dies weiter unten beschrieben ist.

Besonders in Bereichen der Probe, die eine weitgehend homogene Fluoreszenzemission zeigen, kann ein durch Wirkung der strukturierten Strahlformen strukturiertes Lichtblatt selbst als ein Testgitter verwendet werden. Anhand eines solchen Gitters kann z. B. der Kontrast maximiert werden. Dazu wird die Probe mit dem strukturierten Lichtblatt beleuchtet, wobei die auf die Probe gebrachten unterschiedlichen Intensitäten der strukturierten Beleuchtungsstrahlung entsprechend zu einer strukturierten Fluoreszenzanregung in der Probe führt beziehungsweise führen kann. Mittels eines geeigneten Detektors werden Signale der strukturiert angeregten Fluoreszenzstrahlung als Detektionsstrahlung erfasst und maximale Signalintensitäten als $I_{max}$ und minimale Signalintensitäten als $I_{min}$ ermittelt und gespeichert. Eine Modulationstiefe der Gitterstruktur kann mit der Beziehung $I_{max}$-$I_{min}$/$I_{max}$+$I_{min}$ analysiert werden. Es ist aber ebenso möglich, die unten beschriebenen Bildgütekriterien auf diese Teststruktur anzuwenden.

Die Dicke der Probenhalterung wird indirekt auf der Grundlage mindestens zweier Messwerte ermittelt. Eine Möglichkeit besteht in der Auswertung von reflektierten Anteilen der Beleuchtungsstrahlung (Reflexe).

An den Grenzflächen, beispielsweise den Ober- beziehungsweise Unterseiten von Probenhalterungen, kommt es meist zu Reflexionen von Anteilen der Beleuchtungsstrahlung. Reflexionen an diesen Grenzflächen erfolgen mit einem Reflexionsgrad abhängig von der Differenz des Brechungsindex zwischen den Medien (Glas-Immersion, Glas-Probe) und vom Einfallswinkel, beispielsweise von jeweils etwa 3%. Der reflektierte Anteil der Beleuchtungsstrahlung liegt dabei zumeist nahezu vollständig innerhalb der Detektions-NA (Numerische Apertur des Detektionsobjektivs). Dies hat zur Folge, dass der reflektierte Anteil weitgehend auf einem mit dem Detektionsobjektiv optisch verbundenen Detektor abgebildet werden kann. Dieser reflektierte Anteil kann nun genutzt werden, um die Dicke der Probenhalterung, beispielsweise deren für die Beleuchtungsstrahlung und den reflektierten Anteil transparenten Boden, zu ermitteln. Um diesen reflektierten Anteil zu detektieren, kann ein gegebenenfalls im Strahlengang befindlicher Emissionsfilter für die Fluoreszenzmikroskopie entfernt werden.

Dazu kann in einer vorteilhaften Ausgestaltung des erfindungsgemäßen Verfahrens in Schritt C mindestens ein Bündel der Beleuchtungsstrahlung entlang einer ersten optischen Achse (Beleuchtungsachse) unter einem Beleuchtungswinkel auf die ausgerichtete Probenhalterung gelenkt werden, wobei der Beleuchtungswinkel zwischen der ersten optischen Achse und einer senkrecht auf der XY-Ebene stehenden Bezugsachse ungleich Null ist. Die Beleuchtungsstrahlung ist also schräg, beispielsweise unter einem Beleuchtungswinkel von 45° oder 60° auf die Probenhalterung gerichtet. In Schritt D wird ein reflektierter Anteil der Beleuchtungsstrahlung, der von der ersten Seitenfläche oder von der zweiten Seitenfläche der Probenhalterung in einer Soll-Lage mittels eines Detektors als ein erster Messwert erfasst. Anschließend wird die Probenhalterung in Richtung einer senkrecht auf der XY-Ebene gerichteten Z-Achse verschoben, bis ein reflektierter Anteil der jeweils anderen Seitenfläche in der Soll-Lage mittels des Detektors als zweiter Messwert erfasst wird. Die Verschiebestrecke in Richtung der Z-Achse ist als eine Veränderung der Relativlage von Probenhalterung und beispielsweise einem Beleuchtungsobjektiv und/oder einem Detektionsobjektiv zu verstehen. Die Verschiebestrecke kann somit auch durch eine Bewegung von Beleuchtungsobjektiv, Detektionsobjektiv und/oder Detektor sowie durch eine kombinierte Bewegung von Probenhalterung, Beleuchtungsobjektiv, Detektionsobjektiv und/oder Detektor realisiert werden.

Eine Soll-Lage ist erreicht, wenn die Probenhalterung eine erwartete oder gewünschte Positionierung einnimmt. Es kann eine zulässige Toleranz der Soll-Lage festgelegt werden.

In Schritt E wird anhand des ersten und zweiten Messwerts eine Verschiebestrecke in Richtung der Z-Achse ermittelt, die erforderlich war, um die reflektierten Anteile der ersten und zweiten Seitenflächen in der Soll-Lage zu erfassen. Anhand der ersten und zweiten Messwerte wird die Dicke ermittelt. Wenn das Material der Probenhalterung einen anderen Brechungsindex als ein zwischen dem beispielsweise Beleuchtungsobjektiv und der Probenhalterung befindliches Medium besitzt, entspricht die Verschiebestrecke nicht der Dicke der Probenhalterung.

Um bei Kenntnis der Verschiebestrecke die Dicke der Probenhalterung zu ermitteln, können der Beleuchtungswinkel und ein Winkel der durch das Material der Probenhalterung gebrochenen Beleuchtungsstrahlung erfasst werden. Unter Anwendung von Winkelfunktionen (Trigonometrie) und Berücksichtigung der Verschiebestrecke kann die Dicke der Probenhalterung berechnet werden.

In einer weiteren Ausgestaltung des Verfahrens wird ein Bildgütemaß definiert, welches als ein Kriterium zur Einstellung wenigstens eines der Korrekturelemente verwendet wird. Eine aktuelle Ist-Positionierung wenigstens eines der Korrekturelemente wird dabei schrittweise oder kontinuierlich verändert. Jeder der gewählten Ist-Positionierungen wenigstens eines der Korrekturelemente werden Messwerte des Bildgütemaßes zugeordnet und abgespeichert, die an den betreffenden Ist-Positionierungen erfasst werden. Anhand der Messwerte des Bildgütemaßes wird jeweils ein aktueller Wert des Bildgütemaßes ermittelt. Liegen diese aktuellen Werte des Bildgütemaßes für eine Auswertung vor, wird eine Ist-Positionierung des wenigstens einen Korrekturelements ausgewählt, an der ein gewünschtes Bildgütemaß, also ein gewünschter Wert des Bildgütemaßes, erzielt ist. Die ausgewählte Ist-Positionierung kann als zukünftige Soll-Positionierung festgelegt werden.

Vorzugsweise ist vorab eine Tabelle oder eine mathematische Beziehung (Funktion) als Referenz ermittelt und wiederholt abrufbar abgespeichert worden. Diese Referenz erlaubt eine Zuordnung von Werten des Bildgütemaßes zu einer jeweiligen Dicke der Probenhalterung.

Zur Ausführung des Verfahrens können Messwerte wenigstens eines der Bildgütemaße Kontrast, ein Schärfemaß, Signal-Rausch-Verhältnis, Signalintensität und Parameter einer Punktbildfunktion oder Kombinationen davon verwendet werden.

Die Dicke einer jeden Probenhalterung muss individuell auskorrigiert werden, so dass eine Verwendung einer Testprobe wie zum Beispiel eines Gitters, einer USAF-Chart o. ä. hier nicht anwendbar ist. Es ist jedoch in weiteren Ausgestaltungen des erfindungsgemäßen Verfahrens möglich, eine Probe enthaltend vereinzelte punktförmige Fluoreszenzquellen zu verwenden. Es werden mindestens zwei Messwerte des Bildgütemaßes anhand der Detektionsstrahlung wenigstens einer Anzahl der punktförmigen Fluoreszenzquellen erfasst und zur Ermittlung der Dicke der Probenhalterung verwendet. Vereinzelte punktförmige Fluoreszenzquellen überlappen sich nicht. Beispielsweise können vereinzelte fluoreszierende Nanosphären (sogenannte "beads") in die Probe eingebracht werden, um eine probenunabhängige Bildgüteanalyse nur an den sehr hellen Nanosphären vorzunehmen. Sind Nanosphären in der Probe enthalten, so kann mit dem Wissen, dass es sich näherungsweise um Punktobjekte handelt, auch die Punktbildfunktion (point spread function; PSF) der Abbildungsoptik analysiert werden um beispielsweise die FWHM (full width at half maximum) der Punktbildfunktion zu minimieren.

Als Bildgütemaß kann der Kontrast verwendet werden. Der Kontrast eines einzelnen, isolierten Objekts vor einem gleichmäßigen Hintergrund definiert sich über $C = \frac{\Delta S}{S}$, wobei $\Delta S$ die Zu- oder Abnahme des Signals über dem (gleichmäßigen) Hintergrundsignal S ist. Diese Definition ist allerdings für die automatisierte Bestimmung eines lokalen Bildkontrasts einer beliebigen und a priori nicht bekannten Probe nicht geeignet.

Besser dafür geeignet sind Kontrast-Definitionen, die den Kontrast in jedem Bildpunkt des Bildes oder der ROI (Region of Interest) berechnen. Zusätzlich werden nur bestimmte Raumfrequenzbereiche im Fourier-Transformierten Bild betrachtet, wodurch Signal, Hintergrund und Rauschen besser isoliert werden können (Peli, Eli. (1990) "Contrast in complex images." Journal of the Optical Society of America A, 7: 2032-2040).

Der Kontrast in jedem Bildpunkt und je Frequenzband k ergibt sich also zu $c_k(x,y) = \frac{B_k(x,y)}{\sum_{i=0}^{k-1} B_i}$, wobei $B_k(x,y)$ das Bandpass-gefilterte Bild des Frequenzbands k ist und $\sum_{i=0}^{k-1} B_i$ die Energie unterhalb dieses Frequenzbands enthält. Die Grenzen können anhand von typischen Mikroskopie-Bildern im Fourier-Raum geeignet gesetzt werden, so dass dann beispielsweise über den Mittelwert der $c_k(x,y)$ innerhalb des Bildes oder der ROI eine Metrik zur Verfügung steht, die sich durch Verstellen des adaptiven Korrekturelements 2 maximieren lässt.

In einer weiteren mögliche Ausgestaltung des Verfahrens wird das Schärfemaß anhand einer Analyse des Ortsfrequenzraums eines erfassten Bildes ermittelt, indem Raumfrequenzkomponenten des erfassten Bildes mittels eines Schwellwerts in beispielsweise zwei Gruppen unterteilt werden und ein Maximum beziehungsweise Minimum der in der jeweiligen Gruppe enthaltenen Raumfrequenzkomponenten als Schärfemaß verwendet wird (z. B. De, Kanjar, and V. Masilamani. "Image sharpness measure for blurred images in frequency domain." Procedia Engineering 64 (2013): 149-158).

Es ist ferner in einer weiteren Ausgestaltung des Verfahrens möglich, das Schärfemaß anhand einer Analyse des vierten zentralen Moments des Ortsfrequenzspektrums (Kurtosis, zentrales Moment vierter Ordnung, Wölbung) eines erfassten Bildes zu ermitteln, indem niedrige oder minimale Werte der Kurtosis ausgewählt werden (z. B. In Zhang, Nien Fan, et al. "Image sharpness measurement in the scanning electron microscope-Part III." Scanning 21.4 (1999): 246-252).

Um eine hohe Kompensation auftretender Aberrationen zu erreichen, werden vorteilhaft Bilder der zu vermessenden Probe zur iterativen Analyse der entsprechenden Bildgütemaße und nachfolgenden Anpassung des adaptiven Korrekturelements beziehungsweise der Korrekturelemente herangezogen.

Es ist durchaus möglich, dass der iterativ zu prüfende Parameterraum zu groß ist, beziehungsweise dass das System nicht iterativ auf das globale Minimum - beispielsweise eine optimale Neigung der Probenhalterung 7 und eine optimale Fokusposition - hin optimiert werden kann, sondern in einem lokalen Minimum verharrt. Es ist daher vorteilhaft, wenn die Methode der Bildgüteauswertung in Kombination mit einer der vorgenannten Ausgestaltungen des Verfahrens ausgeführt wird. Dabei erfolgt zuerst eine Grobeinstellung der Neigung der Probenhalterung 7 und der Ist-Position in Richtung der Z-Achse Z beispielsweise mittels einer der oben beschriebenen Methoden. Im Anschluss wird eine Feineinstellung mittels einer Bildgüteauswertung durchgeführt. Diese Methode ist nicht für konventionelle Mikroskopsysteme geeignet.

Neben der Einschränkung des möglichen und iterativ zu prüfenden Parameterraums ergibt sich ein weiterer Vorteil: wenn die Deckglasdicke durch den Lichtblattreflex bestimmt und kompensiert wird, kann das adaptive Element durch die iterative Maximierung der Bildgüte gegebenenfalls auch noch weitere, durch die Probe induzierte Aberrationen kompensieren.

Das erfindungsgemäße Verfahren kann Teil eines Verfahrens zur Erfassung von Bilddaten sein. Dabei können Bilddaten einer in der Probenebene des Mikroskops angeordneten Probe erhalten werden, indem mittels einer Beleuchtungsstrahlung in der Probe eine Detektionsstrahlung bewirkt und erfasst wird. Ein derartiges Verfahren umfasst die oben aufgeführten Schritte A bis E zur Bestimmung der Dicke der Probenhalterung.

In einer vorteilhaften Ausgestaltung des Verfahrens wird ein Mikroskop benutzt, das als ein inverses Mikroskop ausgebildet ist. Das inverse Mikroskop umfasst ein Beleuchtungsobjektiv mit einer ersten optischen Achse, wobei die erste optische Achse eine durch eine X-Achse und einer zur X-Achse orthogonalen Y-Achse aufgespannten Probenebene durchstößt. Weiterhin ist ein zur Detektion von aus der Probenebene kommenden Lichts ausgebildetes Detektionsobjektiv mit einer zweiten optischen Achse vorhanden, wobei das Beleuchtungsobjektiv und das Detektionsobjektiv derart zueinander und zur Probenebene ausgerichtet sind, dass sich die erste optische Achse und die zweite optische Achse in der Probenebene schneiden und miteinander einen im Wesentlichen rechten Winkel einschließen. Die erste optische Achse und die zweite optische Achse schließen mit einer orthogonal zur Probenebene in Richtung einer Z-Achse gerichteten und als eine Bezugsachse dienenden dritten Achse jeweils einen von Null verschiedenen Winkel ein. Die vorstehend angegebene Ausgestaltung eignet sich insbesondere für die Lichtblattmikroskopie.

Das erfindungsgemäße Verfahren wird nachfolgend beispielhaft beschrieben. Als Ist-Lage beziehungsweise als Soll-Lage werden im Folgenden die Lagen der Abbildung des reflektierten Anteils auf dem Detektor, insbesondere auf einer Detektionsfläche des Detektors, bezeichnet.

In den Schritten A und B wird die Probenhalterung in der Probenebene angeordnet und ausgerichtet. Das Ausrichten kann manuell oder automatisiert erfolgen. Für das Ausrichten kann bereits ein reflektierter Anteil der Beleuchtungsstrahlung und/oder einer Hilfsstrahlung, beispielsweise einer nur für den Ausrichtevorgang verwendeten Strahlung, genutzt werden und somit der Schritt C in den Vorgang des Ausrichtens der Probenhalterung mit eingebunden werden. Dazu wird beispielsweise eine Probenhalterung, die eine für die Beleuchtungsstrahlung transparenten Boden mit einer ersten Seitenfläche und einer zweiten Seitenfläche aufweist, in Richtung der Z-Achse verschoben, bis der von der ersten Seitenfläche, z. B. der Oberseite, des Bodens reflektierte Anteil der Beleuchtungsstrahlung mittels des Detektors erfasst wird. Die Relativlage der Probenhalterung und des Detektors wird vorzugsweise zueinander so eingestellt, dass eine Ist-Lage des erfassten Anteils einer Soll-Lage auf dem Detektor angenähert wird. Die Soll-Lage ist vorteilhaft mittig auf der Detektorfläche, um während der Einstellung der Soll-Lage eine Ist-Lage des reflektierten Anteils außerhalb der Detektorfläche weitgehend zu vermeiden.

Der Boden kann beispielsweise der Boden einer Schale, beispielsweise aus Glas oder Kunststoff sein. Es ist auch möglich, dass ein Deckglas mit seiner ersten und zweiten Seitenfläche ein Boden im vorgenannten Sinn ist. Von Bedeutung ist eine hinreichende Transparenz des Materials des Bodens für die Beleuchtungsstrahlung beziehungsweise die Beleuchtungsstrahlungen, sowie die erste Seitenfläche und zweite Seitenfläche, die als Grenzflächen wirken, an denen Brechungen und/oder Reflexionen der Beleuchtungsstrahlung erfolgen können.

Das Vorliegen einer Verkippung der ersten Seitenfläche des Bodens um die X-Achse kann überprüft werden, indem eine Winkelabweichung der Ist-Lage von der Soll-Lage ermittelt wird. Wird dabei eine Winkelabweichung festgestellt, die größer als eine zulässige Winkelabweichung ist, wird die Probenhalterung um die X-Achse rotiert bis die Winkelabweichung minimiert ist. Optional kann eine bevorzugte Rotationsrichtung zum Ausgleich der Verkippung ermittelt werden, um zum Beispiel die Winkelabweichung auf dem kürzesten Rotationsweg auszugleichen. Anschließend wird ein Auftreten einer Abweichung der Soll-Position von der Ist-Position in Richtung der Z-Achse überprüft. Bei Auftreten einer unzulässigen Abweichung wird beziehungsweise werden die vorgenannten gegebenenfalls wiederholt. Nach Abschluss dieser Vorgänge ist die Probenhalterung parallel zur X-Achse ausgerichtet.

Optional wird in einem weiteren Ausrichtevorgang eine Ausrichtung der ersten Seitenfläche in Richtung der Y-Achse überprüft, indem die Probenhalterung in Richtung der Y-Achse verschoben wird und eine Abweichung von der Richtung der Y-Achse durch ein Auswandern des erfassten reflektierten Anteils auf dem Detektor festgestellt wird. Bei Auftreten des Auswanderns, also der Ist-Lage, des erfassten reflektierten Anteils wird die Probenhalterung um die X-Achse rotiert bis kein Auswandern mehr auftritt beziehungsweise dieses innerhalb einer zulässigen Toleranzgrenze liegt.

In dem Schritt D des Verfahrens wird die justierte Probenhalterung aus einer ersten (Soll-)Positionierung, in der ein von der ersten Seitenfläche reflektierter Anteil in einer ersten Soll-Lage erfasst wird, in Richtung der Z-Achse verschoben, bis die Abbildung des erfassten reflektierten Anteils eine zweite Soll-Lage erreicht, in der ein von der zweiten Seitenfläche, beispielsweise der Unterseite, des Bodens reflektierter Anteil erfasst wird. In Abhängigkeit von der zwischen der ersten Soll-Lage und der zweiten Soll-Lage zurückgelegten Verschiebestrecke in Richtung der Z-Achse wird ein tatsächlicher Abstand von erster und zweiter Seitenfläche in Richtung der Z-Achse zueinander ermittelt. Der so ermittelte Abstand entspricht der Dicke des Bodens.

Der Abstand beziehungsweise die Dicke des Bodens kann berechnet werden. Eine Berechnungsmöglichkeit ist unten im Zusammenhang mit den Ausführungsbeispielen angegeben.

Die Erfassung des reflektierten Anteils erfolgt mittels eines Detektors, beispielsweise mittels einer Kamera, beispielsweise umfassend einen CCD- oder CMOS-Chip oder mittels einer Vier-Quadrantendiode.

Das erfindungsgemäße Verfahren ist vorteilhaft auch für Mikroskope mit einer senkrechten Ausrichtung eines Strahlengangs beziehungsweise der Strahlengänge anwendbar. Zwar fallen die Aberrationen in solch einer klassischen Anordnung auch geringer aus, für die Abbildungsqualität moderner Objektive mit großen Numerischen Aperturen sind diese Aberrationen jedoch von großer Bedeutung, insbesondere für Wasserimmersionsobjektive oder TIRF-Objektive (TIRF = total internal reflection fluorescence microscopy).

Die Erfindung wird nachfolgend anhand von Ausführungsbeispielen und Abbildungen näher erläutert. Dabei zeigen:

Fig. 1a eine schematische Darstellung eines Mikroskops mit einer 45°-Anordnung von Beleuchtungsobjektiv und Detektionsobjektiv oberhalb sowie mit einem Weitfeldobjektiv unterhalb einer Probenebene gemäß dem Stand der Technik;

Fig. 1b eine schematische Darstellung eines Mikroskops mit einer inversen 45°-Anordnung von Beleuchtungsobjektiv und Detektionsobjektiv unterhalb sowie mit einem Weitfeldobjektiv oberhalb einer Probenebene gemäß dem Stand der Technik;

Fig. 2 eine schematische Darstellung eines Ausführungsbeispiels eines zur Lichtblattmikroskopie ausgebildeten Mikroskops mit Alvarezplatten und Meniskuslinse;

Fig. 3 eine schematische Darstellung eines Ausführungsbeispiels eines inversen Lichtblattmikroskops;

Fig. 4 eine schematische Darstellung von Soll-Lagen und Ist-Lagen reflektierter Anteile der Beleuchtungsstrahlung auf einer Detektorfläche,

Fig. 5 eine schematische Darstellung des Prinzips der Bestimmung der Dicke der Probenhalterung,

Fig. 6 eine schematische Darstellung des Schärfemaßes als Funktion eines unterschiedlich eingestellten Korrekturelements bei unbekannter Dicke der Probenhalterung und

Fig. 7 ein Flussdiagramm einer Ausgestaltung des erfindungsgemäßen Verfahrens.

In den nachfolgenden schematischen Darstellungen von Beispielen aus dem Stand der Technik und von Ausführungsbeispielen der Erfindung bezeichnen gleiche Bezugszeichen gleiche technische Elemente.

Aus dem Stand der Technik ist ein schematisch in Fig. 1a dargestelltes aufrechtes Mikroskop 1 bekannt, das ein Beleuchtungsobjektiv 2, ein Detektionsobjektiv 3 und optional ein Weitfeldobjektiv 20 aufweist. Mittels des Beleuchtungsobjektivs 2 ist entlang einer ersten optischen Achse A1 ein Lichtblatt 6 erzeugt oder erzeugbar, das zur Untersuchung einer in einer Probenebene 4 angeordneten Probe 5 nutzbar ist. Das Detektionsobjektiv 3 weist eine zweite optische Achse A2 auf, entlang der von der Probenebene 4 kommendes Licht erfassbar ist. Die erste optische Achse A1 und die zweite optische Achse A2 sind zueinander orthogonal ausgerichtet und schließen jeweils mit der Probenebene 4, die als Bezugsebene dient, einen Winkel von 45° ein.

Das Weitfeldobjektiv 20 weist eine dritte optische Achse A3 auf, die orthogonal zur Probenebene 4 gerichtet ist und als Bezugsachse B dient. Die ersten bis dritten optischen Achsen A1 bis A3 schneiden sich im Bereich der Ausdehnung des Lichtblatts 6 in der Probe 5. Außerdem schließt die erste optische Achse A1 mit der Bezugsachse B einen ersten Winkel $\alpha 1$ und die zweite optische Achse A2 mit der Bezugsachse B einen zweiten Winkel $\alpha 2$ von 90°- $\alpha 1$, z. B. jeweils 45° ein.

Die Probe 5 ist in einer auf einem Probentisch 11 befindlichen Probenhalterung 7 angeordnet, die mit einer Flüssigkeit 8 gefüllt ist.

Die Fig. 1b zeigt schematisch ein Mikroskop 1 mit einer inversen Anordnung von Beleuchtungsobjektiv 2 und Detektionsobjektiv 3, bei dem das Beleuchtungsobjektiv 2 und das Detektionsobjektiv 3 unterhalb und das Weitfeldobjektiv 20 oberhalb der Probenebene 20 angeordnet sind. Die Winkel $\alpha 1$ und $\alpha 2$ betragen wieder je 45°.

Die nachfolgenden Ausführungsbeispiele sind beispielhaft anhand inverser Mikroskope 1 dargestellt und können in weiteren Ausführungen auch als aufrechte Mikroskope 1 ausgebildet sein.

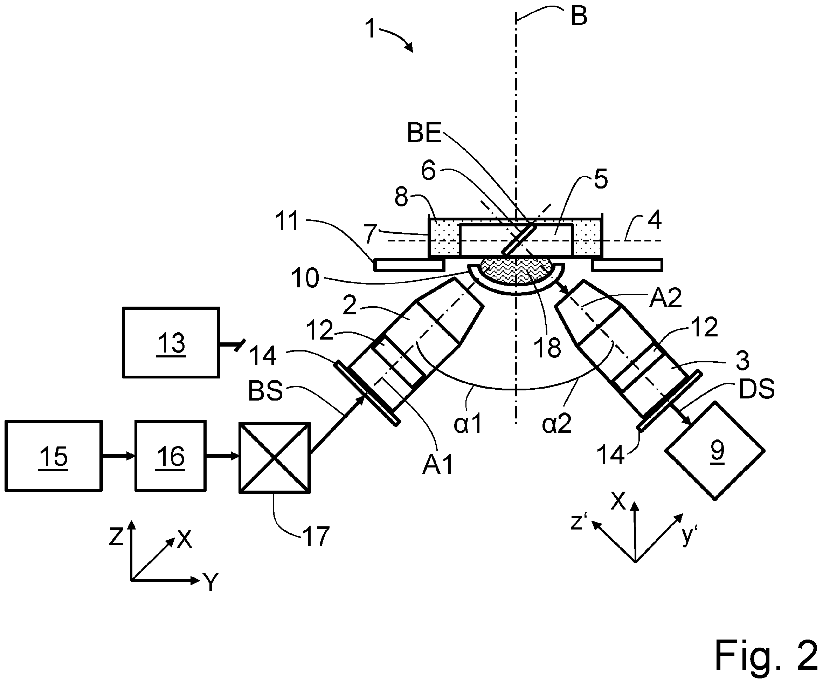

Ein Ausführungsbeispiel eines zur Lichtblattmikroskopie ausgebildeten inversen Mikroskops 1 mit Korrekturelementen 12 in Form von Alvarezplatten und einer Meniskuslinse 10 ist in Fig. 2 dargestellt. Die Winkel $\alpha 1$ und $\alpha 2$ betragen je 45°. Die Korrekturelemente 12 dienen der Korrektur von Aberrationen, die im Wesentlichen aufgrund des schrägen Durchgangs der Beleuchtungsstrahlung BS durch den Boden der Probenhalterung 7 auftreten können. Die optionale Meniskuslinse 10 unterstützt den Übergang der Beleuchtungsstrahlung BS von Luft in ein Immersionsmedium 18 und in die Flüssigkeit 8 sowie für eine Detektionsstrahlung DS von der Flüssigkeit 8 in das Immersionsmedium 18 und in die Luft.

Die Probenhalterung 7 ist auf dem Probentisch 11 gehalten. Der Probentisch 11 selbst ist in einer durch die X-Achse X und die Y-Achse Y aufgespannten XY-Ebene mittels nicht näher dargestellter Antriebe gesteuert verstellbar.

Das Beleuchtungsobjektiv 2 und das Detektionsobjektiv 3 sind jeweils mittels eines Objektivantriebs 14, der hier als ein Piezoantrieb ausgebildet ist, entlang der ersten optischen Achse A1 beziehungsweise entlang der zweiten optischen Achse A2 gesteuert verstellbar.

Die Beleuchtungsstrahlung BS wird durch ein Lasermodul 15 bereitgestellt und mittels einer Strahlformungseinheit 16 geformt. Die Strahlformung 16 ist beispielsweise eine Optik, mittels der die bereitgestellte Beleuchtungsstrahlung BS beispielsweise kollimiert wird.

Der Strahlformungseinheit 16 nachgeordnet ist ein Scanner 17 vorhanden, mittels dem die geformte Beleuchtungsstrahlung BS gesteuert in zwei Richtungen ablenkbar ist (X-Y-Scanner).

Nach dem Scanner 17 ist das Beleuchtungsobjektiv 2 auf der ersten optischen Achse A1 angeordnet. Die von dem Scanner 17 abgelenkte Beleuchtungsstrahlung BS gelangt zu dem Beleuchtungsobjektiv 2 und wird durch dieses geformt und/oder fokussiert.

Die Detektionsstrahlung DS ist entlang der zweiten optischen Achse A2 auf einen Detektor 9 gerichtet und ist durch diesen erfassbar.

Zur Ansteuerung des Probentischs 11, der Piezoantriebe 14, der Korrekturelemente 12, des Lasermoduls 15, der Strahlformung 16, des Scanners 17 und/oder des Detektors 9 ist eine Steuereinheit 13 vorhanden, die mit den anzusteuernden Elementen in einer zur Datenübertragung geeigneten Verbindung steht.

In weiteren Ausführungen ist die Steuereinheit 13 zusätzlich zur Erfassung, Speicherung und/oder zur Auswertung von Messwerten konfiguriert. Mittels der Steuereinheit 13 können weitere Elemente sowie Einheiten des Mikroskops 1 ansteuerbar sein und/oder Messwerte von diesen erhalten und ausgewertet werden.

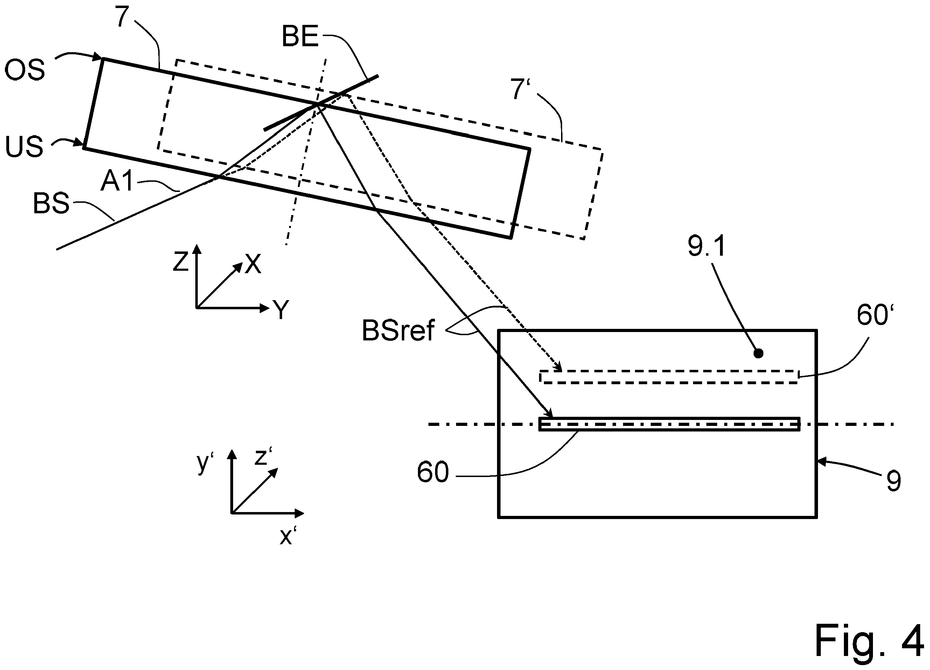

Es werden im Folgenden zur Beschreibung zwei Koordinatensysteme mit zueinander orthogonalen Achsen genutzt. Das erste Koordinatensystem ist das Koordinatensystem der gesamten Anordnung mit einer X-Achse X, einer Y-Achse Y und einer Z-Achse Z. Idealerweise ist die Probenhalterung 7, insbesondere deren Boden, parallel zu einer durch die X-Achse X und die Y-Achse Y aufgespannten XY-Ebene ausgerichtet. Das zweite Koordinatensystem ist das Koordinatensystem des Detektors 9 mit der X-Achse X, einer y-Achse y' und einer z-Achse z'. Eine Abbildung beispielsweise eines Bildes aus der Bildebene BE auf einer Detektorfläche 9.1 (siehe Fig. 4) des Detektors 9 besitzt die Koordinaten X und y'. Die X-Achse X ist in beiden Koordinatensystemen identisch und orthogonal zur Zeichenebene der Figuren gerichtet. Die beiden anderen Achsen Y und y' beziehungsweise Z und z', können durch eine Rotation um die X-Achse X ineinander überführt werden.

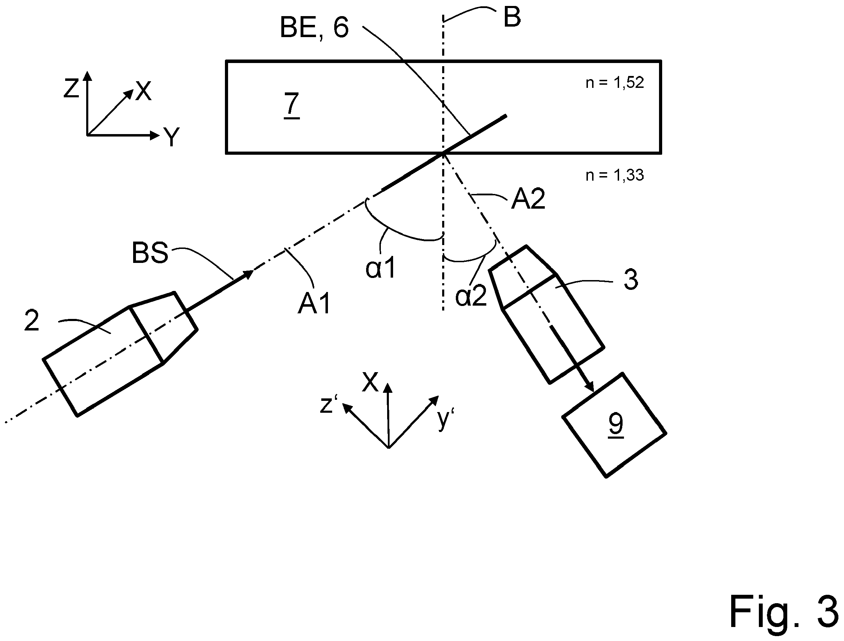

Den folgenden Ausführungsbeispielen liegt beispielhaft ein inverses Lichtblattmikroskop zu Grunde, bei dem die erste optische Achse A1 des Beleuchtungsobjektivs 2 einen Winkel $\alpha 1$ von 60° zur Bezugsachse B und die zweite optische Achse A2 des Detektionsobjektivs 3 einen Winkel $\alpha 2$ von 30° einschließt (Fig. 3). Eine optionale Meniskuslinse 10 ist zur besseren Übersichtlichkeit nicht in allen Abbildungen dargestellt. Des Weiteren wird für die Probenhalterung 7, beispielsweise in Form eines Deckglases oder des Bodens der Probenhalterung 7, ein Brechungsindex von n = 1,52 und für Wasser als Immersionsmedium 18 (vergleiche Fig. 2) ein Brechungsindex von n = 1,33 beispielhaft angenommen. Ein Lichtblatt 6 ist in der Bildebene BE erzeugt beziehungsweise erzeugbar.

Die Detektorfläche 9.1 ist in der Fig. 4 in einer Draufsicht dargestellt, während die Probenhalterung 7 und das Lichtblatt 6 in einer seitlichen Ansicht dargestellt sind. Aus diesen gegeneinander gedrehten Ansichten ergibt sich die dargestellte Orientierung des Koordinatensystems des Detektors 9 mit den Achsen X, y' und z'.

Um die Probenhalterung 7 zu justieren, wird in einem Schritt 1 die Probenhalterung 7 in Richtung der Z-Achse Z verschoben, bis der von der ersten Seitenfläche OS, im dargestellten Ausführungsbeispiel von der Oberseite, reflektierte Anteil der Beleuchtungsstrahlung BSref erfasst wird. Hierbei geht man davon aus, dass die Bildebene BE fest ist. Eine Relativlage der Probenhalterung 7 und des Detektors 9 zueinander wird so verändert, dass eine Ist-Lage des als Bild 60 erfassten Anteils der Beleuchtungsstrahlung BSref einer Soll-Lage des Bild 60 auf der Detektorfläche 9.1 des Detektors 9 angenähert wird (Fig. 4).

Die Ist-Position der Probenhalterung 7 in Richtung der Z-Achse Z ist optimal justiert, wenn das Bild 60 des Querschnitts des Lichtblatts 6 mittig auf der Detektorfläche 9.1 liegt.

Da es sowohl einen Reflex BSref von der ersten Seitenfläche OS als auch von der zweiten Seitenfläche US des Deckglases gibt, ist es notwendig zwischen beiden unterscheiden zu können. Wird die Probenhalterung 7 in eine positive Richtung (in Fig. 4 nach oben) entlang der Z-Achse Z bewegt, so kann als erstes der Reflex BSref an der ersten Seitenfläche OS mittig auf der Detektorfläche 9.1 positioniert werden. Der von der zweiten Seitenfläche US hervorgerufene Reflex BSref kann nur bei einer weiteren Verschiebung in der positiven Richtung entlang der Z-Achse Z mittig justiert werden.

Ist der Querschnitt des Lichtblatts 7 mittig justiert, so ist das Bild 60 in einer Soll-Lage mittig auf der Detektorfläche 9 abgebildet, wie dies in Fig. 4 schematisch dargestellt ist.

Die beschriebene Justierung der Probenhalterung 7 kann durch eine Bestimmung der Dicke d beispielsweise des Bodens der Probenhalterung 7 ergänzt werden. Es wird nachfolgend vereinfachend auf die Dicke d des Bodens einer Probenhalterung 7 beziehungsweise auf die Dicke d eines als Probenhalterung 7 verwendeten Deckglases Bezug genommen.

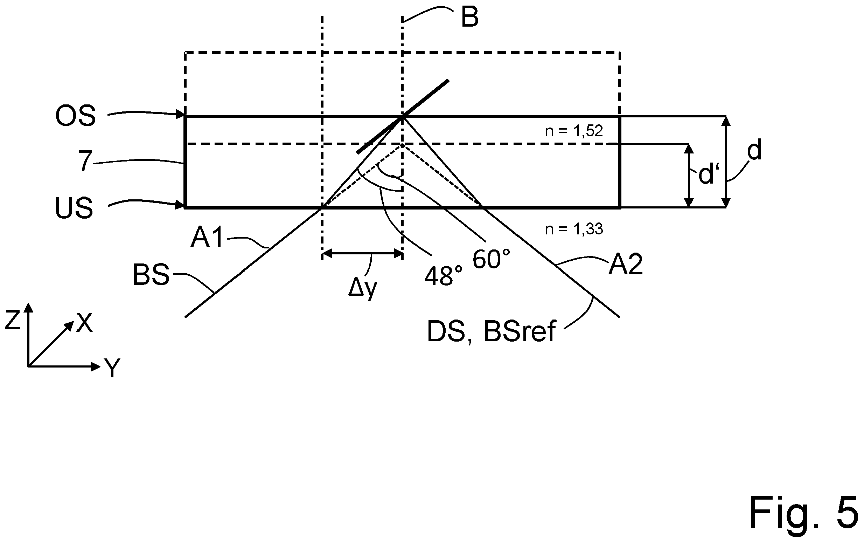

Ein beispielhafter Strahlengang der Beleuchtungsstrahlung BS und der Detektionsstrahlung DS beziehungsweise eines reflektierten Anteils BSref der Beleuchtungsstrahlung BS ist in der Fig. 5 dargestellt. Die Beleuchtungsstrahlung BS wird entlang der ersten optischen Achse A1 unter einem Winkel von 60° zum Lot auf die Unterseite US der Probenhalterung 7 gerichtet. Bei dem Durchgang der Beleuchtungsstrahlung BS durch die von der Unterseite US gebildeten Grenzfläche zwischen Luft mit einem Brechungsindex n = 1,33 und dem Material der Probenhalterung 7 mit einem Brechungsindex n = 1,52, wird die Beleuchtungsstrahlung BS zum Lot hin gebrochen und verläuft bis zur Oberseite OS der Probenhalterung 7 unter einem Winkel von 48°.

An der ersten Seitenfläche OS erfolgt in einer Bildebene BE die Reflektion des Anteils der Beleuchtungsstrahlung BSref zurück zur zweiten Seitenfläche US. Beim Durchgang des reflektierten Anteils der Beleuchtungsstrahlung BSref durch die zweite Seitenfläche US wird dieser wieder vom Lot weg gebrochen und gelangt entlang der zweiten optischen Achse A2 als Detektionsstrahlung DS beispielsweise zum Detektor 9 (nicht gezeigt, vergleiche Fig. 4).

Aberrationen, die bei einem schiefen Durchgang der Beleuchtungsstrahlung BS durch die Probenhalterung 7 auftreten, sind wesentlich von deren Dicke d, also dem Abstand von erster und zweiter Seitenfläche OS, US abhängig. Aus diesem Grund sind beispielsweise die Korrekturelemente 12 (Fig. 2) verschiebbar in den Beleuchtungsobjektiv 2 und/oder dem Detektionsobjektiv 3 gelagert, um durch eine Verschiebung der Korrekturelemente 12 zueinander eine Aberrationskorrektur auf die Dicke d abzustimmen.

Die Dicke d der Probenhalterung 7 kann anhand der Reflexe BSref von erster und zweiter Seitenfläche OS, US bestimmt werden. In Fig. 5 sind die beiden Reflexe BSref schematisch dargestellt, wobei d die Dicke und d' eine Verschiebestrecke der Probenhalterung 7 in positiver Richtung entlang der Z-Achse Z ist.

Die Bestimmung der Dicke d wird folgendermassen durchgeführt:
Zuerst wird die Probenhalterung 7 so eingestellt, das der Reflex BSref von der ersten Seitenfläche OS in der Soll-Lage, beispielsweise mittig, als Bild 60 auf der Detektorfläche 9.1 liegt (siehe Fig. 4) und die Probenhalterung 7 keine Neigung aufweist. Der Winkel zwischen Beleuchtungsstrahlung BS und Bezugachse B beträgt im Beispiel außerhalb der Probenhalterung 60°, innerhalb der Probenhalterung 7 aufgrund der auftretenden Brechung aber 48°. Die Bezugsachse B verläuft durch die Bildebene BE (siehe Fig. 3) und durch den vereinfacht dargestellten Auftreffpunkt der Beleuchtungsstrahlung BS auf der ersten Seitenfläche OS. In Richtung der Y-Achse Y ist mit Δy eine Strecke zwischen dem Durchtrittspunkt der Beleuchtungsstrahlung BS durch die zweite Seitenfläche US und einem Auftreffpunkt auf der ersten Seitenfläche US bezeichnet.

Dann wird die Probenhalterung 7 in positiver Richtung entlang der Z-Achse Z verschoben, bis der Reflex BSref von der zweiten Seitenfläche US in der Soll-Lage als Bild 60 auf der Detektorfläche 9.1 liegt (vergleiche Fig. 4). Die dazu erforderliche Verschiebestrecke d' wird ermittelt, beispielsweise gemessen oder berechnet. Der Winkel zwischen der ungebrochenen Beleuchtungsstrahlung BS und der Bezugachse B beträgt im Beispiel nun 60°.

Die Dicke d der Probenhalterung 7 kann nun mittels der folgenden trigonometrischen Beziehungen und der im Beispiel gegebenen Winkel berechnet werden:

$$\tan(60°) = \Delta y/d'$$

$$\tan(48°) = \Delta y/d$$

wobei Δy die Strecke zwischen dem Durchgang der Beleuchtungsstrahlung BS und der Bezugsachse B gemessen in Richtung der X-Achse X ist.

Die Dicke d berechnt sich aus d' * tan(60°)/tan(48°).

In weiteren Ausgestaltungen des Verfahrens kann eine Neigungskorrektur zusätzlich erfolgen, indem ein Lichtblatt 6 mit einer Wellenlänge erzeugt wird, die zur Bildgebung nicht verwendet wird, z. B. im Bereich infraroten Lichts. Dieses Lichtblatt 6 kann permanent oder zu bestimmten Zeitpunkten beispielsweise während eines Experiments genutzt werden, um die Ist-Position der Probenhalterung 7, insbesondere deren Ist-Position in Richtung der Z-Achse Z, zu kontrollieren und gegebenenfalls während des Experiments zu korrigieren. Statt eines Lichtblatts 6 kann auch ein Strahl, beispielsweise ein Gaußstrahl, ein Besselstrahl oder ein Mathieustrahl verwendet werden. Als Detektor 9 kann eine Vier-Quadrantendiode verwendet werden.

Es kann in weiteren möglichen Ausgestaltungen ein Autokollimationsfernrohr auf die Probenhalterung 7 gerichtet werden. Eine Schiefstellung der Probenhalterung 7 wird in eine Verschiebung des Reflexes BSref auf dem Detektor 9 des Autokollimationsfernrohrs umgewandelt. Mit diesem Ansatz kann nur der Neigungswinkel justiert werden.

Eine weitere mögliche Ausgestaltung bedingt einen kollimierten Laser, der auf die Probenhalterung 7 gerichtet wird. Der Laser ist parallel zum Lot, beispielsweise zur Bezugsachse B ausgerichtet. Der Reflex BSref wird beispielsweise mittels eines Strahlteilers oder einer Pol-Optik ausgespiegelt und auf einer Vier-Quadrantendiode registriert. Mit Hilfe des Signals der Vier-Quadrantendiode kann nun die Neigung der Probenhalterung 7 eingestellt und korrigiert werden. Eine Einstellung der Ist-Position in Richtung der Z-Achse Z ist mit dieser Ausgestaltung nicht möglich. Die beiden vorgenannten Methoden sind für konventionelle Mikroskopsysteme und Lichtblattmikroskope geeignet.

Es ist ferner in einer weiteren Ausgestaltung des Verfahrens möglich, zusätzlich eine Auswertung nach Bildgütemaß vorzunehmen. So kann beziehungsweise können iterativ die Neigung und/oder die Fokusposition des Detektionsobjektivs 3 verstellt werden um Messwerte des gewählten Bildgütemaßes an gewünschte Messwerte anzunähern oder beispielsweise zu maximieren. Dazu kann die zu vermessende Probe 5 selbst verwendet werden oder es wird das Strahlprofil eines Strahls der gewählten Beleuchtungsstrahlung BS analysiert.

In einer weiteren möglichen Ausführung wird die Topographie der Probe 5 durch Messung der Schärfe oder eines anderen Bildgütekriteriums der aufliegenden Probe 5 an mindestens drei Punkten und durch eine entsprechende Nachregelung der Abstände mindestens eines der Objektive 2, 3 zur Probe 5 bestimmt und daraus die lokale Deckglasneigung errechnet.

In weiteren möglichen Ausgestaltungen können auf der Probenhalterung 7 aufliegende Nanopartikel (sogenannte Fiducials, beads) oder auf die Probenhalterung 7 aufgebrachte Markierungen als Proben 5 fungieren.

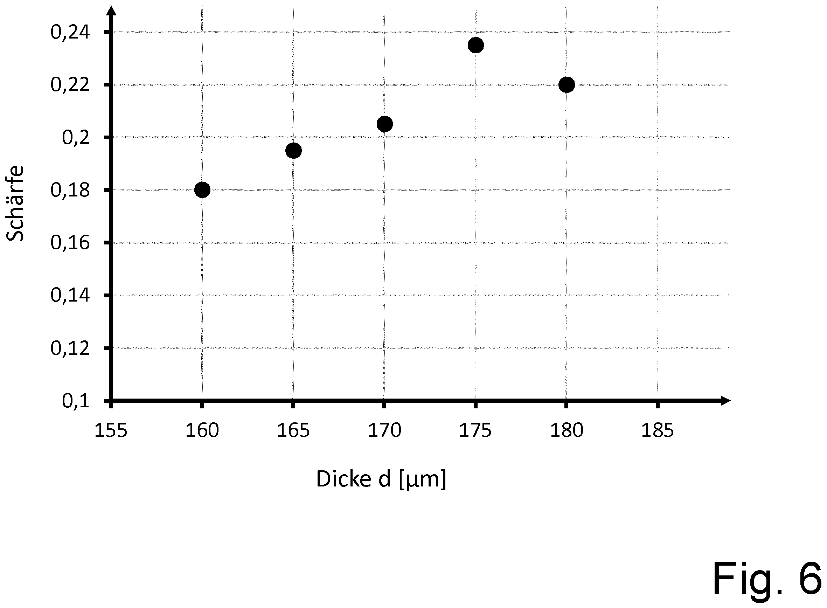

In Fig. 6 ist beispielhaft ein Zusammenhang zwischen der Dicke d und dem Bildgütemaß Schärfe einer Probenhalterung 7 a priori unbekannter Dicke d dargestellt. Die Korrekturelemente 12 beziehungsweise wenigstens das im Strahlengang der Detektionsstrahlung DS vorhandene Korrekturelement 12 wird schrittweise auf eine mögliche Dicke d der Probenhalterung 7 eingestellt. Als Schrittweite sind 5 µm beginnend mit einer Dicke d von 160 µm gewählt. Mit jeder so gewählten Einstellung der Korrekturelemente 12 beziehungsweise des Korrekturelements 12 wird eine Schärfe eines mittels der Detektionsstrahlung DS erfassten Bildes ermittelt. In der grafischen Darstellung der Messwerte ist erkennbar, dass ein maximaler Wert des Bildgütemaßes Schärfe bei einer Einstellung des Korrekturelements 12 beziehungsweise der Korrekturelemente 12 erreicht wird, bei der Aberrationen einer Probenhalterung 7 mit einer nominellen Dicke d von 175 µm ausgeglichen werden. Es kann daher auf eine tatsächliche Dicke d von 175 µm geschlossen werden.

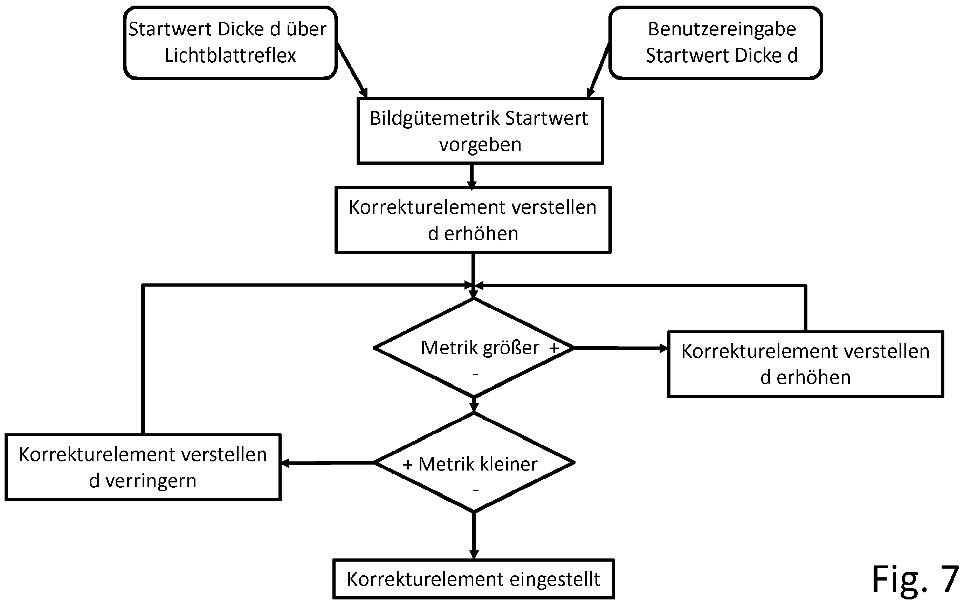

In der Fig. 7 ist ein Flussdiagramm eines Ablaufs einer Ausgestaltung des erfindungsgemäßen Verfahrens zur Bestimmung der Dicke d sowie einer Einstellung des mindestens einen Korrekturelements 12 in Abhängigkeit der Dicke d dargestellt.

Ein Startwert des Bildgütemaßes (Bildgütemetrik) kann optional durch einen Benutzer eingegeben oder beispielsweise aufgrund einer Dickenbestimmung unter Nutzung des reflektierten Anteils BSref vorgegeben werden. Die derart ermittelte oder vorgegebene Dicke d dient als Startwert und erste Einstellung des mindestens einen Korrekturelements 12. Anschließend wird das Korrekturelement 12 in eine Einstellung gebracht, die einer größeren Dicke d entspricht. Nimmt der Wert des mit dieser Einstellung ermittelten Bildgütemaßes zu, wird eine Einstellung gewählt, die wiederum einer größeren Dicke d entspricht. Diese Schleife kann solang wiederholt werden, bis der Wert des Bildgütemaßes nicht mehr ansteigt oder wieder sinkt. Sinkt der Wert des Bildgütemaßes nach Auswahl einer Einstellung des mindestens einen Korrekturelements 12, wird eine Einstellung gewählt, die einer gegenüber der vorhergehenden Einstellung verringerten Dicke d zugeordnet ist. Ist eine Einstellung gefunden, in der ein Wert des Bildgütemaßes maximal ist, ist das mindestens eine Korrekturelement 12 eingestellt und die Regelschleife kann beendet werden. Es ist von Vorteil, wenn ein Abbruchkriterium festgelegt ist, bei dessen Erfüllung die Regelschleife beendet wird. So kann beispielsweise eine Mindestdifferenz der Werte des Bildgütemaßes festgelegt werden, bei deren Unterschreiten ein Abbruch erfolgt.

Bezugzeichen

| 1 | Mikroskop |
|---|---|
| 2 | Beleuchtungsobjektiv |
| 3 | Detektionsobjektiv |
| 4 | Probenebene |
| 5 | Probe |
| 6 | Lichtblatt |
| 60 | Bild (Abbildung/Bild des Lichtblattquerschnitts) |
| 60' | Bild (des Lichtblattquerschnitts bei verschobener Probenhalterung 7') |
| B | Bezugsachse |
| BS | Beleuchtungsstrahlung |
| BSref | reflektierter Anteil (der Beleuchtungsstrahlung BS) |
| DS | Detektionsstrahlung |
| BE | Bildebene |
| 7 | Probenhalterung |

| | |
|---|---|
| 7' | virtuell verschobene Probenhalterung 7 |
| 8 | Flüssigkeit |
| 9 | Detektor |
| 9.1 | Detektorfläche |
| 10 | Meniskuslinse |
| 11 | Probentisch |
| 12 | Korrekturelement |
| 13 | Steuereinheit |
| 14 | Objektivantrieb |
| 15 | Lasermodul |
| 16 | Strahlformung |
| 17 | X-Y-Scanner |
| 18 | Immersionsmedium |
| A1 | erste optische Achse |
| A2 | zweite optische Achse |
| $\alpha1$ | Winkel (zwischen erster optischer Achse A1 und Bezugsachse B) |
| $\alpha2$ | Winkel (zwischen zweiter optischer Achse A2 und Bezugsachse B) |
| d | Abstand, Dicke |
| d' | Verschiebestrecke |
| OS | erste Seitenfläche, erste Grenzfläche (Oberseite) |
| US | zweite Seitenfläche, zweite Grenzfläche (Unterseite) |
| $\Delta y$ | Strecke (in Richtung der Y-Achse Y) |

**Patentansprüche**

1. Verfahren zur Bestimmung der Dicke (d) einer für eine Beleuchtungsstrahlung (BS) transparenten und zur Aufnahme einer Probe (5) ausgebildeten Probenhalterung (7) im Strahlengang eines Mikroskops (1), mit den Schritten:

    A: anordnen der Probenhalterung (7), die eine erste Grenzfläche (OS) und eine zweite Grenzfläche (US) aufweist, in einer Probenebene (4), wobei sich die Probenebene (4) in einer durch eine X-Achse (X) und eine Y-Achse (Y) eines kartesischen Koordinatensystems aufgespannten XY-Ebene befindet,
    B: ausrichten der ersten Grenzfläche (OS) und der zweiten Grenzfläche (US) parallel zur Probenebene (4),
    C: richten mindestens eines Bündels der Beleuchtungsstrahlung (BS) entlang einer ersten optischen Achse (A1) unter einem Beleuchtungswinkel auf die ausgerichtete Probenhalterung (7),
    D: erfassen mindestens zweier Messwerte eines reflektierten Anteils (BSref) der Beleuchtungsstrahlung (BS) oder mindestens zweier Messwerte einer durch die Beleuchtungsstrahlung (BS) bewirkten Detektionsstrahlung (DS),
    E: Ermitteln eines Abstands von erster und zweiter Grenzfläche (OS, US) in Richtung der Z-Achse (Z) zueinander als Dicke (d) in Abhängigkeit der mindestens zwei erfassten Messwerte.

2. Verfahren nach Anspruch 1, **dadurch gekennzeichnet, dass** im Strahlengang der Beleuchtungsstrahlung (BS), in einem Strahlengang des reflektierten Anteils (BSref) und/oder in einem Strahlengang der Detektionsstrahlung (DS) angeordnete optisch wirkende Korrekturelemente (12) in Abhängigkeit der ermittelten Dicke (d) angesteuert und deren relative Positionen in dem jeweiligen Strahlengang eingestellt werden.

3. Verfahren nach Anspruch 1 oder 2, **dadurch gekennzeichnet, dass** mittels der Beleuchtungsstrahlung (BS) ein Lichtblatt (6) in der Probenebene (4) erzeugt wird.

4. Verfahren nach einem der vorhergehenden Ansprüche, **dadurch gekennzeichnet, dass** in Schritt C der Beleuchtungswinkel zwischen der ersten optischen Achse (A1) und einer senkrecht auf der XY-Ebene stehenden Bezugsachse ungleich Null ist, in Schritt D ein reflektierter Anteil (BSref) der Beleuchtungsstrahlung (BS), der von der ersten Seitenfläche (OS) oder von der zweiten Seitenfläche (US) der Probenhalterung (7) in einer Soll-Lage mittels eines Detektors (9) als ein erster Messwert erfasst wird und anschließend die Probenhalterung (7) in Richtung einer senkrecht auf der XY-Ebene gerichteten Z-Achse (Z) verschoben wird, bis ein reflektierter Anteil (BSref) der jeweils anderen Grenzfläche (OS, US) in der Soll-Lage mittels des Detektors (9) als zweiter Messwert erfasst wird und in Schritt E anhand des ersten und zweiten Messwerts eine Verschiebestrecke (d') in Richtung der Z-Achse (Z) ermittelt wird, die erforderlich war, um die reflektierten Anteile (BSref) der ersten und zweiten Grenzflächen (OS, US) in der Soll-Lage zu erfassen und die Dicke (d) ermittelt wird.

5. Verfahren nach einem der Ansprüche 2 bis 4, **dadurch gekennzeichnet, dass** ein Bildgütemaß definiert wird, eine Ist-Positionierung wenigstens eines der Korrekturelemente (12) verändert wird, zugeordnet zu jeder der gewählten Ist-Positionierungen Messwerte des Bildgütemaßes erfasst werden, jeweils ein aktueller Wert des Bildgütemaßes anhand der Messwerte des Bildgütemaßes ermittelt wird und eine Ist-Positionierung des wenigstens einen Korrekturelements (12) ausgewählt wird, an der ein gewünschter Wert des Bildgütemaßes vorliegt.

6. Verfahren nach Anspruch 5, **dadurch gekennzeichnet, dass** die Messwerte wenigstens eines der Bildgütemaße Kontrast, ein Schärfemaß, Signal-Rausch-Verhältnis, Signalintensität und Parameter einer Punktbildfunktion verwendet werden.

7. Verfahren nach Anspruch 5 oder 6, **gekennzeichnet durch** die Verwendung einer Probe (5) enthaltend vereinzelte punktförmige Fluoreszenzquellen und Erfassen mindestens zweier Messwerte des Bildgütemaßes anhand der Detektionsstrahlung (DS) einer Anzahl der punktförmigen Fluoreszenzquellen.

8. Verfahren nach Anspruch 6, **dadurch gekennzeichnet, dass** das Schärfemaß anhand einer Analyse des Ortsfrequenzraums eines erfassten Bildes ermittelt wird, indem Raumfrequenzkomponenten des erfassten Bildes mittels eines Schwellwerts in Gruppen unterteilt werden und ein Maximum beziehungsweise Minimum der in der jeweiligen Gruppe enthaltenen Raumfrequenzkomponenten als Schärfemaß verwendet wird.

9. Verfahren nach Anspruch 6, **dadurch gekennzeichnet, dass** das Schärfemaß anhand einer Analyse des vierten zentralen Moments des Ortsfrequenzspektrums (Kurtosis) eines erfassten Bildes ermittelt wird, indem niedrige oder minimale Werte der Kurtosis ausgewählt werden.

10. Verfahren nach einem der vorhergehenden Ansprüche, **gekennzeichnet durch** die Verwendung einer Strahlung mit selbstrekonstruierenden Strahlen oder diffraktionsfreien Strahlen als Beleuchtungsstrahlung (BS).

11. Verfahren zur Erfassung von Bilddaten einer in einer Probenebene (4) eines Mikroskops (1) angeordneten Probe (5) umfassend die Schritte A bis E nach Anspruch 1, bei dem mittels einer Beleuchtungsstrahlung (BS) in der Probe (5) eine Detektionsstrahlung (DS) bewirkt und erfasst wird.

Fig. 1b

Stand der Technik

Fig. 1a

Stand der Technik

Fig. 2

EP 3 499 177 A2

Fig. 3

Fig. 4

Fig. 5

EP 3 499 177 A2

Fig. 6

EP 3 499 177 A2

Startwert Dicke d über Lichtblattreflex

Benutzereingabe Startwert Dicke d

Bildgütemetrik Startwert vorgeben

Korrekturelement verstellen d erhöhen

Metrik größer +

−

Korrekturelement verstellen d erhöhen

Korrekturelement verstellen d verringern

+ Metrik kleiner

−

Korrekturelement eingestellt

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3305294 A

- DE 102016212019

**In der Beschreibung aufgeführte Nicht-Patentliteratur**

- **MCGORTY et al.** Open-top selective plane illumination microscope for conventionally mounted specimens. *OPTICS EXPRESS,* 2015, vol. 23, 16142-16153
- **GUTIERREZ-VEGA, J. C. et al.** Experimental demonstration of optical Mathieu beams. *Optics Communications,* 2001, vol. 195, 35-40

- **PELI, ELI.** Contrast in complex images. *Journal of the Optical Society of America A,* 1990, vol. 7, 2032-2040
- **DE, KANJAR ; V. MASILAMANI.** Image sharpness measure for blurred images in frequency domain. *Procedia Engineering,* 2013, vol. 64, 149-158
- **ZHANG, NIEN FAN et al.** Image sharpness measurement in the scanning electron microscope-Part III. *Scanning,* 1999, vol. 21.4, 246-252